# DEMANDE DE BREVET EUROPEEN

(11) **EP 4 811 164 A1**
(43) Date de publication de la demande: **23.09.2026**
(21) Numéro de dépôt: 25315084.1
(22) Date de dépôt: 18.03.2025
(51) Int. Cl.: G06F 16/3329, G06N 5/02

(54) **SYSTÈME DE ROBOT CONVERSATIONNEL AUTO-ADAPTATIF**

(71) Demandeur: ILIAD, 75008 Paris (FR)
(72) Inventeur: Escande, Patrick, 75008 Paris (FR); D'Urso, Lucas, 75008 Paris (FR); Rastit, Jerome, 75008 Paris (FR)
(74) Mandataire: Dupuis-Latour, Dominique

(57) **Abrégé**

Système de robot conversationnel comprenant un workflow modulaire (100) segmenté en une pluralité de sous-modules (q0, q1, q2, ...) interconnectés définissant une progression du workflow suivant une pluralité de parcours possibles (a, b, ...), un service d'inférence (300) basé sur des Grands modèles de langage, LLM, et un module orchestrateur (200) couplé avec le workflow et avec le service d'inférence LLM et apte à commander des transitions entre les sous-modules du workflow. Les sous-modules comprennent au moins un sous-module incluant une machine à états déterministe, au moins un sous-module incluant une machine à états non-déterministe, et au moins un sous-module incluant une machine à états à logique floue. Le service d'inférence LLM est apte à recevoir du workflow des requêtes émises par au moins l'un des sous-modules, comprenant : des demandes formulées par un utilisateur du robot conversationnel ; des données de contexte conversationnel ; des données de contexte utilisateur ; et/ou des données d'historique. Il produit un résultat d'inférence LLM à partir des requêtes reçues, sélectionne en temps réel en fonction du résultat de l'inférence LLM un sous-module courant ayant émis une requête respective, et délivre au module orchestrateur un ordre d'exécution des transitions sélectionnées par le résultat de l'inférence LLM pour le sous-module courant.

## Description

### Domaine technique de l'invention

L'invention concerne un système de robot conversationnel.

Les robots conversationnels, ou agents conversationnels, habituellement désignés "chatbots" (terme usuel qui sera utilisé dans la présente description) sont des interfaces logicielles automatisées conçues pour établir un dialogue, sous forme textuelle ou vocale, avec des utilisateurs afin de guider ces derniers, étape par étape, vers des réponses à des interrogations ou demandes de renseignements formulées en langage plus ou moins naturel.

La progression des échanges entre le chatbot et l'utilisateur se fait sous forme d'une succession de questions/réponses contrôlées et orientées par le chatbot, et qui peut être décrite par un chemin au sein d'un workflow modulaire.

### État de la technique antérieure

Les premiers chatbots étaient de type "rule-based", c'est-à-dire que le workflow utilisait des règles prédéfinies et des arbres décisionnels pour répondre à des questions spécifiques. Ce type de chatbot était toutefois limité à ce qui avait été programmé, avec impossibilité de gérer des requêtes complexes ou imprévues.

Les performances et l'efficacité des chatbots ont pu être grandement améliorées en les associant à des grands modèles de langage (LLM) mettant en œuvre des processus d'inférence exécutant un modèle déjà entraîné pour traiter les requêtes issues du workflow et générer en réponse des actions correspondantes, le tout avec traitement en langage naturel (NLP).

Ces chatbots "Al-powered" ne sont toutefois pas dépourvus d'inconvénients et de limitations.

Parmi les risques susceptibles d'être rencontrés, on peut citer :
- manque de robustesse dans les scénarios complexes, avec risque de dérive conversationnelle (dans les conversations à étapes multiples ou les conversations techniques, le chatbot peut se contredire ou générer des réponses incohérentes), et/ou production de réponses redondantes ou inutiles (lorsque qu'un utilisateur répète une demande ou pose une question difficile, le chatbot peut donner une réponse générique ou ignorer le point principal) ;
- suradaptation au style de l'utilisateur par le chatbot, qui cherche à être trop "agréable" ou "proche" de l'utilisateur, au détriment de l'exactitude (par exemple en approuvant une hypothèse erronée, pour éviter de contredire l'utilisateur) ; et
- hallucinations, lorsque le chatbot génère des informations incorrectes ou inventées tout en semblant convaincu de leur validité.

Ces effets sont principalement dus au fait que les LLM sont des modèles probabilistes basés sur des prédictions statistiques, qui peuvent conduire à des réponses crédibles mais fausses, et que d'autre part le modèle ne distingue pas intrinsèquement le "vrai" du "faux" et peut confondre des informations proches ou inexistantes, le modèle n'étant pas capable de vérifier les faits qui lui sont présentés ou qui sont générés.

On constate également que le chatbot peut perdre de vue l'objectif initial recherché par l'utilisateur au cours de la conversation, en devenant trop général, ambigu ou même hors sujet.

En effet, les LLM peuvent manquer de focalisation contextuelle, avec une difficulté à rester concentrés sur une tâche spécifique notamment dans les conversations longues. Et dans les conversations ouvertes, plus le contexte est large plus le risque de déviation augmente.

Enfin, les chatbots actuels présentent un certain nombre de limitations telles que :
- confusion contextuelle : lorsque le contexte devient complexe ou si plusieurs sujets sont abordés simultanément, le chatbot peut perdre le fil ;
- profondeur limitée : bien que certains chatbots soient spécialisés dans un domaine, ils peuvent manquer de précision dans des sujets complexes ou techniques ;
- difficulté avec les tâches spécifiques : les chatbots généralistes ne sont pas toujours efficaces pour exécuter des tâches précises nécessitant des processus métier ou des connaissances spécifiques ;
- logique limitée : les chatbots ont du mal avec des raisonnements complexes ou des problèmes nécessitant plusieurs étapes ; et/ou
- gestion des contradictions : les chatbots peuvent générer des réponses contradictoires ou illogiques dans une même conversation, qui peuvent être flagrantes pour l'utilisateur mais qui ne sont pas détectées par le chatbot.

### Exposé de l'invention

L'invention a pour but de proposer une nouvelle structure de chatbot qui remédie à ces inconvénients et limitations des solutions actuelles des chatbots "Al-powered".

L'invention vise de tels chatbots basés sur des LLM, et plus précisément des chatbots dont le workflow modulaire intègre des sous-modules à base de machines à états.

L'invention propose en particulier de réaliser un chatbot hybride à modalités multiples, dont le workflow associe trois types différents de machines à états, à savoir : au moins une machine à états déterministe, au moins une machine à états non-déterministe, et au moins une machine à états à logique floue.

Par "machine à états déterministe" on entendra une machine à états qui suit toujours un chemin unique et prévisible pour chaque entrée donnée, garantissant ainsi un comportement parfaitement contrôlé et reproductible.

Par "machine à états non-déterministe", on entendra une machine à états qui peut proposer, pour un même état et une même entrée, plusieurs chemins parallèles possibles avec un certain degré d'imprévisibilité, donnant ainsi lieu à davantage de flexibilité et la possibilité d'explorer plusieurs scénarios de manière concurrente (mais avec en contrepartie une incapacité à déterminer avec rigueur et fiabilité la prochaine étape ou la prochaine tâche exécutée).

Par "machine à états logique floue", on entendra une machine à états qui gère des degrés d'incertitude ou de probabilité pour chaque transition d'un état à l'autre, permettant ainsi d'intégrer des nuances et des comportements plus proches de la manière dont un humain évalue une situation ambiguë.

L'idée de base de l'invention consiste à combiner et faire interagir :
- les machines à états déterministes, d'une part pour l'ossature générale du workflow et d'autre part à l'intérieur de modules obligatoires ou critiques du workflow ;
- les machines à états non-déterministes, à l'intérieur de modules pouvant prendre en compte le contexte système et le contexte utilisateur ; et
- les machines à états logique floue, à l'intérieur de modules pouvant gérer l'ambiguïté ou la simultanéité de certaines conditions en amont d'un changement d'état ; et enfin :
- un LLM agissant comme moteur textuel et décisionnel, capable de comprendre les requêtes en langage naturel, de détecter l'intention de l'utilisateur, de récupérer des données pertinentes, de générer les interactions avec les utilisateurs, et de déclencher des actions ou des transitions d'état en se basant sur des probabilités et du contexte conversationnel. Il est également possible, et avantageux, de combiner le LLM à des processus connus en tant que tels, tels que Function Calling et RAG.

Cette combinaison unique de trois machines à états de nature différente et d'un LLM permet au chatbot de naviguer entre plusieurs scénarios, et de choisir dynamiquement la meilleure transition en fonction du contexte, tout en intégrant la puissance de la génération de texte par le LLM et la possibilité d'appels à des API externes.

Plus précisément, l'invention propose un système de robot conversationnel comprenant un workflow modulaire segmenté en une pluralité de sous-modules interconnectés, un service d'inférence basé sur des Grands modèles de langage, LLM, et un module orchestrateur couplé avec le workflow et avec le service d'inférence LLM et apte à commander des transitions entre les sous-modules du workflow.

L'interconnexion des sous-modules définit une progression du workflow suivant une pluralité de parcours possibles d'un sous-module courant à un sous-module suivant, et les sous-modules comprennent au moins un sous-module incluant une machine à états déterministe, au moins un sous-module incluant une machine à états non-déterministe, et au moins un sous-module incluant une machine à états à logique floue.

Le service d'inférence LLM est apte à recevoir du workflow des requêtes émises par au moins l'un des sous-modules, comprenant : des demandes formulées par un utilisateur du robot conversationnel ; des données de contexte conversationnel ; des données de contexte utilisateur ; et/ou des données d'historique. Il produit un résultat d'inférence LLM à partir des requêtes reçues, sélectionne en temps réel en fonction du résultat de l'inférence LLM un sous-module courant ayant émis une requête respective, et délivre au module orchestrateur un ordre d'exécution des transitions sélectionnées par le résultat de l'inférence LLM pour le sous-module courant.

Selon diverses caractéristiques subsidiaires avantageuses :
- le module orchestrateur est apte à délivrer des ordres de transition d'un sous-module courant vers un sous-module suivant du workflow conformément à une logique de machine à états déterministe ;
- chaque sous-module du workflow est associé à un référentiel propre comprenant : des données de contexte du sous-module ; un ensemble d'états de machine à états définissant chacun un action unitaire respective ; une transition ou une pluralité de transitions possibles entre états de machine à états ; et/ou un jeu de fonctions externes susceptibles d'être appelées par le sous-module ;
- au moins certains sous-modules du workflow sont associés à un référentiel propre comprenant un historique des transitions entre sous-modules ;
- le service d'inférence LLM est également apte, en fonction du résultat de l'inférence LLM, à produire sélectivement un ordre d'appel de fonction, Function Calling, par le sous-module courant, notamment une tâche apte à commander des transitions entre états de la machine à états du sous-module courant, et/ou à commander une interaction du sous-module courant avec des services externes au workflow et/ou internes du workflow, indépendamment d'une inférence LLM ;
- le service d'inférence LLM est également apte, en fonction du résultat de l'inférence LLM, à produire sélectivement un ordre d'activation ou de désactivation d'un ou plusieurs des états de la machine à états du sous-module courant ;
- le service d'inférence LLM est également apte, en fonction du résultat de l'inférence LLM, à déclencher une tâche d'optimisation de type génération augmentée par récupération, RAG, notamment une tâche apte à opérer un échange avec l'utilisateur du robot conversationnel ;

### Brève description des dessins

On va maintenant décrire des exemples de mise en œuvre de l'invention en référence aux figures annexées.
La Figure 1 est un synoptique montrant la structure générale du chatbot selon l'invention.
La Figure 2 illustre un exemple de sous-module à machine à états déterministe intégrée au workflow du chatbot de la Figure 1.
La Figure 3 illustre un exemple de sous-module à machine à états non-déterministe intégrée au workflow du chatbot de la Figure 1.
La Figure 4 illustre un exemple de sous-module à machine à états à logique floue intégrée au workflow du chatbot de la Figure 1

### Description détaillée de modes de réalisation de l'invention

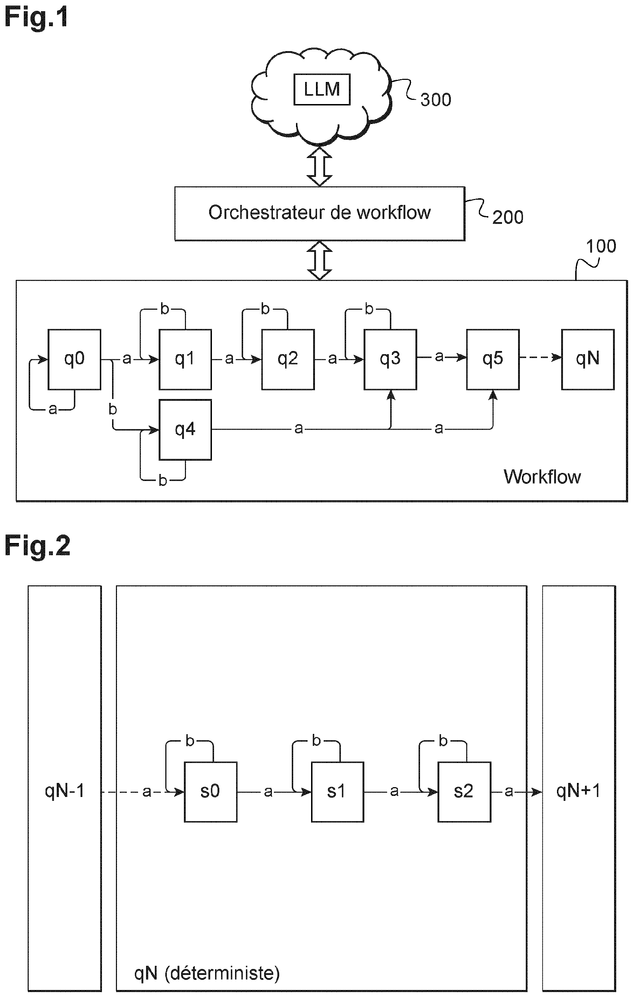

On va maintenant décrire un exemple de mise en œuvre de l'invention, en référence aux dessins annexés où les mêmes références désignent d'une figure à l'autre des éléments identiques ou fonctionnellement semblables. Sur la Figure 1 on a illustré l'architecture générale du chatbot selon l'invention, qui comporte un workflow modulaire 100 segmenté en une pluralité de sous-modules q0, q1, q2, ... définissant une progression du workflow 100 suivant une pluralité de parcours possibles a, b, ... d'un sous-module courant qi au sous-module suivant qi+1, depuis un sous-module initial jusqu'à un sous-module final.

La progression du workflow 100 est pilotée par un orchestrateur de workflow 200, qui est d'autre part interfacé à un service d'inférence LLM 300.

Le service d'inférence LLM 300 est externe au chatbot, il opère selon un mécanisme connu en soi et son mode de fonctionnement n'a pas besoin d'être modifié ou adapté pour mettre en œuvre l'invention. En ce qui concerne les données particulières sur lesquelles est entraîné le LLM pour produire le résultat de l'inférence, celles-ci relèvent du contenu cognitif du workflow et ne font pas partie de la présente invention.

La progression d'un sous-module qi au sous-module qi+1 suivant (par exemple une progression contrôlée selon un parcours a ou bien un parcours b dans l'exemple de la Figure 1) est définie par une machine à états finis déterministe opérée par l'orchestrateur de workflow 200, de manière à garantir la robustesse et la fiabilité du parcours global du workflow entre les différents sous-modules.

Chaque sous-module q0, q1, q2, ... du workflow 100 est associé à un référentiel propre comprenant : des données de contexte du sous-module ; un ensemble d'états de machine à états définissant chacun un action unitaire respective ; une transition ou une pluralité de transitions possibles entre états de machine à états ; et/ou, éventuellement, un jeu de fonctions externes susceptibles d'être appelées par le sous-module.

Certains sous-modules du workflow peuvent également être associés à un référentiel propre comprenant un historique des transitions entre états et/ou entre sous-modules.

Les Figures 2 à 4 illustrent trois types possibles de sous-modules du workflow 100.

Chacun de ces sous-modules est défini par un contexte et des instructions ou étapes spécifiques prédéfinies (s0, s1, s2, ... sur les Figures 2 à 4) avec des transitions a, b, c, ..., également spécifiques, internes au sous-module. Ces étapes ou instructions prédéfinies correspondent aux différents états possibles de la machine à états, et seront ci-après désignées simplement par le terme d'"états".

Les relations entre les différents états définissent une pluralité de parcours possibles au sein du sous-module qN, depuis un point d'entrée interfacé en amont au sous-module précédent qN-1, jusqu'à un point de sortie interfacé en aval au sous-module suivant qN+1.

Au sein d'un même sous-module qN, les transitions entre états sont définies par un processus de type machine à états.

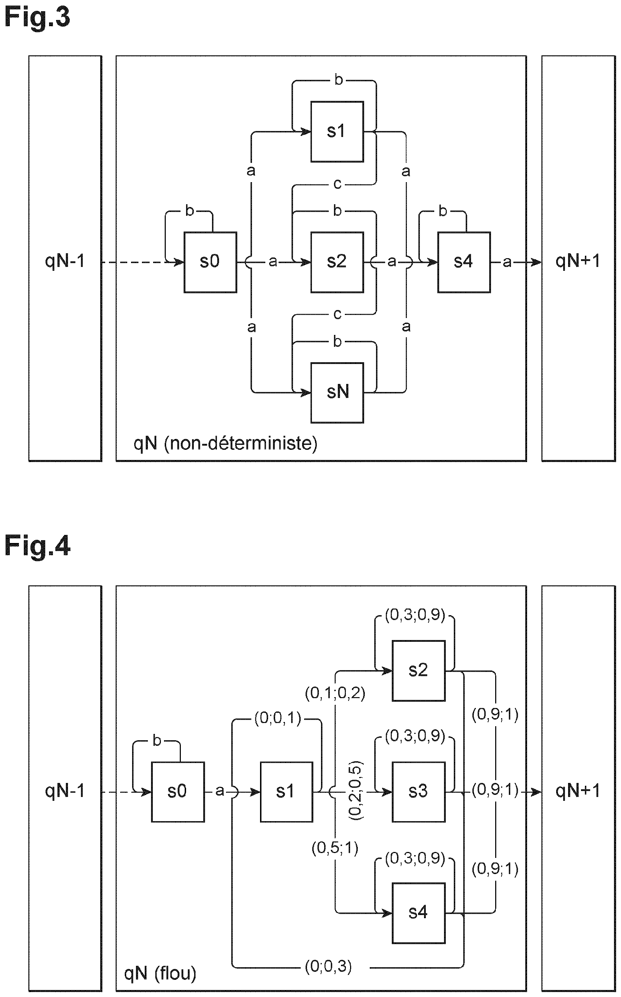

De façon caractéristique de l'invention, les divers sous-modules du workflow 100 combinent, au sein de l'ossature globale déterministe du workflow 100 (selon l'architecture illustrée Figure 1) :
- au moins un sous-module contrôlé en interne par une machine à états déterministe (tel que le sous-module illustré Figure 2) ;
- au moins un sous-module contrôlé en interne par une machine à états non-déterministe (tel que sous-module illustré Figure 3) ; et
- au moins un sous-module contrôlé en interne par une machine à états logique floue (tel que le sous-module illustré Figure 4).

La Figure 2 illustre un exemple d'un sous-module à machine à états déterministe comprenant trois états s0, s1 et s2. Un sous-module à machine à états déterministe est choisi pour des états du chatbot qui imposent des conditions strictes, fortement contraintes, de manière à garantir la sécurité du système global.

Il peut s'agir par exemple d'un sous-module dont la fonction dans le chatbot est l'acceptation des conditions générales d'utilisation (CGU) d'un site avec lequel un utilisateur souhaite converser et éventuellement passer une commande et effectuer un paiement. Dans un tel cas d'utilisation, la fonction comprend un premier état s0 d'accueil prévenant l'utilisateur qu'il va devoir donner son acceptation aux CGU, un second état s1 de présentation des CGU pour lecture par l'utilisateur, et un troisième état s2 d'acceptation par l'utilisateur des CGU après lecture.

Le passage du sous-module qN au sous-module qN+1 suivant, et donc la poursuite de la conversation entre le chatbot et l'utilisateur, sera conditionné à la confirmation donnée par l'utilisateur à ces trois étapes, avec donc "aaa" comme seul chemin acceptable (et, dans le cas contraire, bouclage "b" sur l'étape non acceptée).

Dans un autre cas d'utilisation, le même type de sous-module régi par une machine à états déterministe peut être utilisé pour un sous-module de paiement, avec éventuellement au sein du sous-module plusieurs options offertes à l'utilisateur (mode de paiement, type de livraison, ...), mais dans tous les cas de façon totalement sure et dépourvue d'aléa.

Une telle logique de machine à états déterministe ne nécessite pas de recourir à une inférence LLM pour la transition d'un état à l'autre, toutes les transitions pouvant être contrôlées par la machine à états de façon purement interne au sous-module.

La Figure 3 illustre un exemple d'un sous-module à machine à états non-déterministe comprenant cinq états s0, s1, s2, s4, et sN. Les transitions a, b, c entre les différentes états sont régies par un processus non-déterministe, de manière à procurer un fort degré de flexibilité dans la mise en œuvre du sous-module : gestion des questions, requête des utilisateurs, conversation ouverte, etc.

Il peut s'agir par exemple d'un sous-module dont la fonction est la présentation d'un produit ou d'un service avant achat, avec possibilité de navigation entre de multiples options.

Dans cet exemple, les états de la machine à états sont par exemple :
- s0 : présentation générale du produit ou du service, pouvant mener à s1, s2 ou sN,
- s1 : présentation des détails techniques du produit ou service,
- s2 : présentation des avis d'utilisateurs,
- sN : autre sujet ou conversation, qui seront gérés par une inférence LLM en fonction du contexte courant, et
- s4 : confirmation adressée à l'utilisateur après que celui-ci a arrêté son choix, avant de passer à un sous-module suivant qN+1 du workflow tel qu'un sous-module d'achat.

La Figure 4 illustre un exemple d'un sous-module à machine à états à logique floue comprenant cinq états s0, s1, s2, s3, s4.

Dans une telle logique floue, au lieu de critères binaires (oui/non, condition remplie/non remplie, etc.) la logique attribue des poids p (0 ≤ p ≤ 1) aux différentes transitions possibles entre les états.

Il s'agit de répliquer de cette manière des comportements humains et de faire face à des questions qui sont formulées en langage libre de façon non quantifiée.

Par exemple, pour le choix d'un appareil photo : "une bonne qualité d'image", "une utilisation simple", "un prix raisonnable", etc.

La pondération appliquée correspondra à des degrés de satisfaction attribués à chaque critère, par exemple 0,6 pour la simplicité, 0,8 pour la qualité d'image, etc.

Le processus mis en oeuvre par le sous-module comprend les étapes successives suivantes, assistées par le LLM :
1) identification des critères : "qualité d'image", "simplicité d'utilisation", "prix" etc. ;
2) attribution de scores partiels et pondération : chaque critère reçoit une note floue, puis est multiplié par un poids ;
3) transitions floues : le passage d'un état au suivant est opéré en fonction de combinaisons de scores ; et
4) agrégation finale pour aboutir à la recommandation d'un appareil.

Ces étapes faisant appel à des inférences LLM, le workflow émet à destination du service LLM 300 des requêtes non quantifiées formulées par l'utilisateur en langage naturel, et reçoit en retour des résultats d'inférence permettant de définir de façon rationnelle les transitions entre les états du sous-module sur la base de ces requêtes.

Avantageusement, et de façon générale, toutes les interactions du workflow 100 avec le service d'inférence LLM 300 peuvent déclencher des ordres d'appel de fonction (Function Calling) pour effectuer de façon subsidiaire des actions telles que :
- commande des transitions entre les états de la machine à états du sous-module courant,
- interaction du sous-module courant avec un microservice externe au workflow, utilisé ici indépendamment de l'inférence LLM qui a déclenché l'appel à ce service, et/ou
- interaction du sous-module courant avec un microservice interne, intégré au workflow.

La fonction appelée, déclenchée automatiquement en fonction du contexte, permet par exemple d'interagir avec des services tels que paiement, CRM, base de données, etc.

L'implémentation d'un tel mécanisme de Function Calling piloté par le LLM (mais "agnostique" au modèle LLM, c'est-à-dire indépendant de celui-ci), piloté par le LLM conjugué à l'architecture associant trois types différents de sous-modules, apporte une flexibilité conversationnelle supérieure au chatbot, sans sacrifier le contrôle.

Avantageusement, pour augmenter la pertinence et l'efficacité du chatbot, le service d'inférence LLM peut déclencher en fonction des résultats de l'inférence une tâche d'optimisation de type génération augmentée par récupération, RAG. Le RAG, qui est une technique en elle-même connue, permet dans le cas présent de combiner génération de texte par le LLM, reformulation éventuelle de la requête (également via le LLM) et récupération d'informations dans une base de données spécifique, de manière que le moteur d'inférence LLM s'appuie sur des données vérifiées et contrôlées plutôt que sur des suppositions ou des informations erronées ou expirées. Un RAG augmente la fiabilité des informations présentées à l'utilisateur et, en restreignant le contexte transmis au moteur d'inférence LLM, réduit le risque d'hallucination. Il est possible de disposer d'autant de RAG que de sous-modules, avec des RAG qui peuvent être différents d'un sous-module à un autre.

Enfin, le service LLM peut également, en fonction du résultat de l'inférence, produire un ordre d'activation ou de désactivation d'un ou plusieurs des états de la machine à états du sous-module courant, de manière à activer ou désactiver dynamiquement certains états d'un sous-module de façon entièrement automatique, en fonction des besoins réels du chatbot. Le système peut ainsi adapter au plus juste, en temps réel, les ressources de calcul et de mémoire en fonction de ce qui est réellement indispensable.

## Revendications

1. Un système de robot conversationnel, **caractérisé en ce qu'**il comprend :
- un workflow modulaire (100), segmenté en une pluralité de sous-modules (q0, q1, q2, ...) interconnectés, la pluralité de sous-modules comprenant :
. au moins un sous-module incluant une machine à états (s0, s1, s3, ...) déterministe ;
. au moins un sous-module incluant une machine à états (s0, s1, s3, ...) non-déterministe ; et
. au moins un sous-module incluant une machine à états (s0, s1, s3, ...) à logique floue,
l'interconnexion des sous-modules (q0, q1, q2, ...) définissant une progression du workflow (100) suivant une pluralité de parcours possibles (a, b, c, ...) d'un sous-module courant (qN) à un sous-module suivant (qN+1) ;
- un service d'inférence (300) basé sur des Grands modèles de langage, LLM ; et
- un module orchestrateur (200), couplé d'une part avec le workflow (100) et d'autre part avec le service d'inférence LLM (300), le module orchestrateur (200) étant apte à commander des transitions entre les sous-modules (q0, q1, q2 ...) du workflow (100),
dans lequel le service d'inférence LLM (300) est apte à :
. recevoir du workflow (100) des requêtes émises par au moins l'un des sous-modules, comprenant : des demandes formulées par un utilisateur du robot conversationnel ; des données de contexte conversationnel ; des données de contexte utilisateur ; et/ou des données d'historique ;
. produire un résultat d'inférence LLM à partir des requêtes reçues ;
. en fonction du résultat de l'inférence LLM, sélectionner en temps réel d'un sous-module courant (qN), desdits au moins un des sous-modules, ayant émis une requête respective ; et
. délivrer au module orchestrateur (200) un ordre d'exécution des transitions sélectionnées par le résultat de l'inférence LLM pour le sous-module courant (qN).

2. Le système de robot conversationnel de la revendication 1, dans lequel le module orchestrateur (200) est apte à délivrer des ordres de transition d'un sous-module courant (qN) vers un sous-module suivant (qN+1) du workflow conformément à une logique de machine à états déterministe.

3. Le système de robot conversationnel de la revendication 1, dans lequel chaque sous-module (q0, q1, q2, ...) du workflow (100) est associé à un référentiel propre comprenant : des données de contexte du sous-module (q0, q1, q2, ...) ; un ensemble d'états (s0, s1, s3, ...) de machine à états définissant chacun un action unitaire respective ; une transition ou une pluralité de transitions possibles entre états (s0, s1, s3, ...) de machine à états ; et/ou un jeu de fonctions externes susceptibles d'être appelées par le sous-module (q0, q1, q2, ...).

4. Le système de robot conversationnel de la revendication 1, dans lequel au moins certains sous-modules (q0, q1, q2, ...) du workflow (100) sont associés à un référentiel propre comprenant un historique des transitions entre sous-modules.

5. Le système de robot conversationnel de la revendication 1, dans lequel le service d'inférence LLM (300) est également apte, en fonction du résultat de l'inférence LLM, à produire sélectivement un ordre d'appel de fonction, Function Calling, par le sous-module courant (qN).

6. Le système de robot conversationnel de la revendication 3, dans lequel la fonction appelée par Function Calling est une tâche apte à commander des transitions entre états (s0, s1, s3, ...) de la machine à états du sous-module courant (qN), et/ou à commander une interaction du sous-module courant (qN) avec des services externes au workflow et/ou internes du workflow, indépendamment d'une inférence LLM.

7. Le système de robot conversationnel de la revendication 1, dans lequel le service d'inférence LLM (300) est également apte, en fonction du résultat de l'inférence LLM, à produire sélectivement un ordre d'activation ou de désactivation d'un ou plusieurs des états (s0, s1, s3, ...) de la machine à états du sous-module courant (qN).

8. Le système de robot conversationnel de la revendication 1, dans lequel le service d'inférence LLM (300) est également apte, en fonction du résultat de l'inférence LLM, à déclencher une tâche d'optimisation de type génération augmentée par récupération, RAG.

9. Le système de robot conversationnel de la revendication 8, dans lequel la tâche RAG est une tâche apte à opérer un échange avec l'utilisateur du robot conversationnel.
